# EUROPEAN PATENT APPLICATION

(11) **EP 2 653 027 A1**
(43) Date of publication of application: **23.10.2013**
(21) Application number: 11848662.0
(22) Date of filing: 11.07.2011
(51) Int. Cl.: A01G 27/04, A01G 9/04

(54) **SUPPORTING DEVICE CAPABLE OF ALLOWING LOCATION OF FLOWERPOT TO BE MOVED**

(30) Priority: 16.12.2010 KR 20100013005 U
(71) Applicant: Posi Inc, Seoul 133-120 (KR)
(72) Inventor: JUNG, Gisun, Hanam-Si Gyeonggi-Do 465-190 (KR)
(74) Representative: Fritzon, Rolf
(86) International application number: PCT/KR2011/005066
(87) International publication number: WO 2012/081782

(57) **Abstract**

The present invention relates to a supporting device capable of allowing a location of a flowerpot to be moved. The supporting device covers the upper surface of a storage member of a plant cultivation device for cultiv-ating a plant using water, and the purpose of the present invention is to supply water to a flowerpot that is placed anywhere on the upper surface, to prevent a malfunction of a water feed means by blocking the discharge of soil from the flowerpot, and to block the inflow of dust in the air or the leaves of a planted plant by covering the upper surface of the storage member, thereby preventing the contamination of water. The purpose is achieved by comprising: supporting members which are formed in the form of a plate are placed on the upper surface of the storage member to be connected to each other and to cover the upper surface of the storage member, and comprise a plurality of holes for water supply formed on the plate to allow water to be supplied to a plant planted in a flowerpot movably placed on the upper surface; and hole stopper members for covering the holes for water supply except the selected holes for water supply to prevent the inflow of dust in the air or the leaves of a planted plant into the storage member.

## Description

### [Technical Field]

The present invention relates to a supporting device having capability to relocate the flowerpots. More particularly, a plant cultivating bed, which is utilizing the water to cultivate the plants has multi-stage of plant storing units for easily shuttle-wise relocating the flowerpots on the panel (bed). The plant storing units are attachable or detachable on the supporting device, which has equipped with water supplying system and providing a shield to prevent the influx of the dust or dirt.

### [Background Art]

As noticed recently, there is a tendency to develop a plant cultivating device, which is utilizing the water supplying system to cultivate the plants.

Such a plant cultivating device is usually placed on the narrow space, for example of a balcony or a veranda of a home or an Apartment. Therefore, it must have a structure of the multi-stage of the flowerbed selves.

Aforementioned multi-staged structure of the plant cultivating unit is used to place the plant pots on it. Further, a water inlet for supplying the water above the plant has formed an opening top of the plant cultivating device. It also has equipped water storage and the supplying system for supplying the water to the plants being planted in the flowerpots. On the bottom corner of the plant cultivating unit, a water outlet has formed for draining the excess water. The plant cultivating unit including the storing container is formed the multiple stages. The water pump is for supplying the water to the highest stage unit, and then let the excess water flows down to the lower stage units, sequentially.

A general structure of the conventional plant cultivating device has formed the multiple stage units, too. The water is supplied to the highest plant cultivating unit stage, and the excess water is flown down to the lower plant cultivating unit stage through a drainage connected between the stages.

The water supplying means, which is a water circulating pump supplies the water to the top stage of the plant cultivating device. Then, let the water is filled to store in the highest plant cultivating unit stage. The excess water is over flown to the lower stage of the plant cultivating units through the drainage for filling and storing the water in the lower stage, and so on. Finally, the excess water is flown into the water storage. Then, the circulating pump will operate to supply the water to the top stage of the plant cultivating unit for water circulation.

Therefore, it is possible to supply the water for cultivating the plants on the multiple stage of the plant cultivating device.

### [Disclosure]

### [Technical Problem]

The conventional multi-staged plant cultivating device is commonly placed the flowerpots on the cultivating unit, and circulating the water from top stage to the lower stages through the drain. However, the conventional plant cultivating device has a problem of the dirt wash down. When the excess water is drained to the lower stage of the plant cultivating units, the dirt will be washout flown down to the circulating system and the circulating pump. The influx of the dirt will be caused not only the troublesome of the pump, but also the contamination of the environment.

Further, the conventional multi-staged plant cultivating device commonly has provided an opened top of the plant cultivating and storing units, where the flowerpots are place. Because the circulating water is exposed to the room air, it will be easily picked up the room dust and other debris from the air. It will be a problem of the contamination of the circulation water.

### [Technical Solution]

In order to solve the aforementioned problems, the inventor of the present invention improves the structure of the multi-staged plant cultivating unit by adopting a panel cover on top surface of the system and improves the water circulating system. The improved plant cultivating device of the present invention has designed for supplying the water to the plant located on any location of the plant panel. It also has designed to avoid the dirt washout from the pot while the water overflows. Therefore, it will protect the water supplying means i.e. the circulation pump from the troublesome. The shield above the cultivating unit will prevent the deposit of the dust from room air or fallen leaves.

### [Technical Objective]

In order to achieve the above mentioned objective, the present invention provides that: a water storage unit is for storing the water; a water supply pump is for supplying the water from the water storage unit through the water supplying pipe; a through hole has formed at one end side for passing through the water supplying pipe; a connecting unit and a supporting unit (column) have formed at opposite end side for stacking sequentially; the water inflowing to the upper stage is circulated and flown down to the lower stage through a drain hole, the drain hole has formed at one side to flow down the excess water to the lower stage; a plant cultivating unit has included the storing unit formed a container shape for storing inflowing water and overflowing the excess water; a plant cultivating unit having a shield to cover a top surface of the plant cultivating unit; the supporting unit consists of a plurality of the supporting panels for covering the top surface of the plant cultivating unit, so as to prevent the deposit of dust from room air and influx of foreign objects, such as the fallen leaves; and a plurality of water supplying holes have formed on the supporting panels for supplying the water to the plants, so that the water is able to supply to the flowerpots being located in any position of the panels.

In addition, the supporting unit consists of the first, second, third and fourth supporting panels formed the rectangular shape and abutted each other for covering the top surface of the plant cultivating unit, so that it is possible to prevent influx of the foreign objections; a plurality of plugs are blocking the water supplying holes, so that it will be easy to move the flowerpots in any position on the panel; a couple of the circular cutouts and the end brackets have formed at one end side of the first and fourth panels for installing a connecting unit and a supporting unit (column) by passing through.

Further, a mounting seat is formed for mount-stopping a circular mounting plate; a mounting rim has circumferentially formed extending to lower part of the circular mounting plate for inserting into the water supplying holes; a couple of the inserting sections has formed on the mounting rim by cutting out the arch-shape along the circumferential edge.

### [Advantageous Effects]

Accordingly, the supporting device having capability to relocate the flowerpots of the present invention has improved the structure of the multi-staged plant cultivating unit by adopting a shield (cover) on top surface of the system and improves the water circulating system. The improved plant cultivating unit has designed to easily supply the water to the plant being placed on the plant cultivating panel in any position, and to prevent the dirt washout from the pot while the water overflows. Therefore, it will protect the water circulation pump i.e. supplying means from out of order. The shield above the plant cultivating unit will prevent the water contamination by avoiding the deposit of the dust from room air or fallen leaves.

### [Brief Description of the Drawings]

FIG. 1 is a perspective view showing an assembly of cultivating unit on the supporting device having capability to relocate the flowerpots of the present invention.

FIG. 2 is a schematic top view showing an enlarged cultivating unit of the supporting device having capability to relocate the flowerpots according to the present invention.

FIG. 3 is a schematic bottom view showing an enlarged cultivating unit of the supporting device having capability to relocate the flowerpots according to the present invention.

### [The Detailed Description of The Invention]

Hereinafter, the supporting device having capability to relocate the flowerpots of the present invention will be described in detail accompanied with the example.

Mostly, it should be noted that the identical character reference number will be used as possibly for the identical elements or parts in the drawings. In the explanation, the known technology will be omitted to avoid the ambiguity of gist of the present invention.

According to the present invention, the plant cultivating units can be assembled by stack sequentially to form the supporting device having capability to relocate the flowerpots. It is also possible to apply the plant cultivating units assembled in the horizontal direction. Hereinafter, the assembly of the plant cultivating units will be explained to stack sequentially with an example.

As shown in the attached Figs, 1 to 3, the supporting device having capability to relocate the flowerpots of the present invention is comprised of: a water storage unit (not shown) for storing the water; a water supplying pipe-line (not shown) for supplying the water from the water storage unit by operating a pump installed in a case (11); a through hole (not shown) has formed at one end side for passing through the water supplying pipe; a connecting unit (12) and a supporting unit (column) (13) have formed at opposite end side for stacking of the multi plant cultivating unit (14), sequentially; the drain hole (not shown) has formed at one side to flow down the excess water to the lower stage; a plant cultivating unit (15) includes the storing unit (14) formed a container shape for storing inflowing water and overflowing the excess water to the different region, (i.e. lower stage); a plant cultivating unit (10) and the storing unit (14) have a shield to cover the top surface of them; the supporting unit (110) consists of a plurality of supporting panels being abutted each other to cover the top surface of the water storing unit, and it is possible to place the plant pots on the panel of any location; a plurality of water supplying holes formed on the supporting panels to supply the water to the lower surface of the flowerpots, so that the water is able to supply to the flowerpots located on the panel of any position; it will also prevent the dirt washout from the pot while the water overflows. Therefore, it will protect the water supplying means (i.e. the water circulation pump) from out of order. The shield coved over the water storing unit (14) will prevent the contamination of the water by avoiding the deposit of the dust from room air and the fallen leaves.

That is, the supporting device (100) having capability to relocate the flowerpots of the present invention has the storing unit (14) with an opened top surface. The abutted panels are formed a shield to cover the top surface of the storing unit (14); a plurality of water supplying holes has formed on the supporting panels for supplying the water to the plants placed on the panel, so that the water is able to supply to the planted pots being placed on the panels of any position; The shield coved above the water storing unit (14) will protect the water contamination from the dust in the room air and the fallen leaves of the plant.

Hereinafter, the more detailed explanations of the supporting device having capability to relocate the flowerpots of the present invention will be presented.

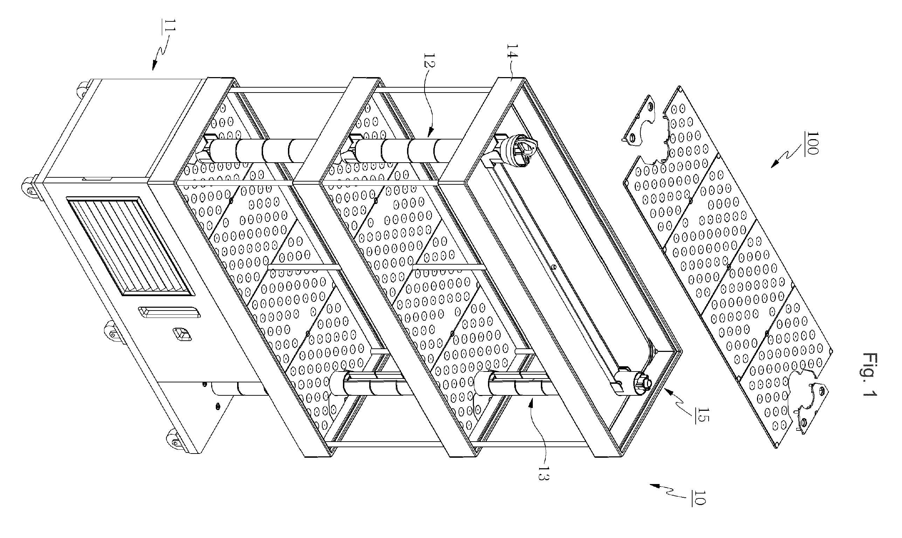

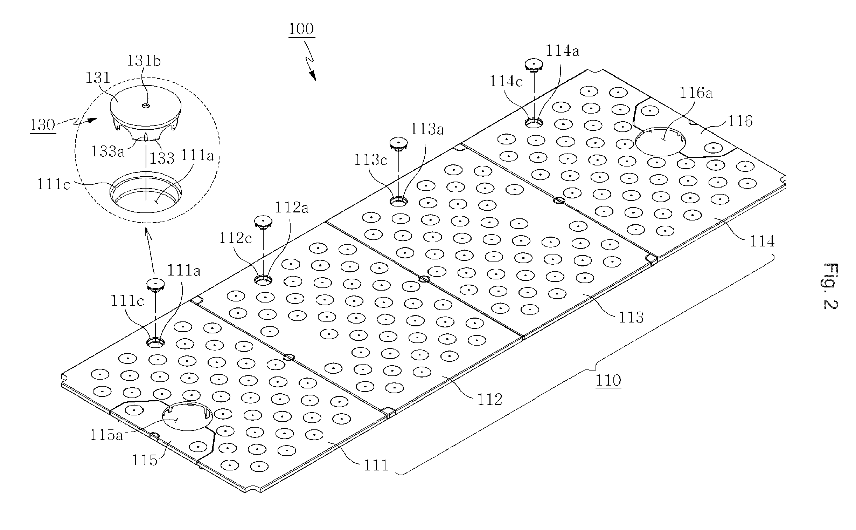

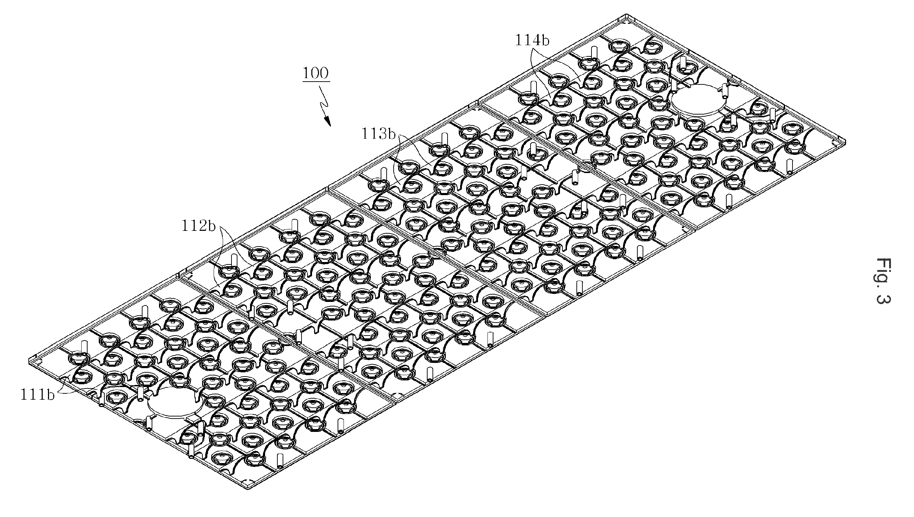

First, the supporting unit (110) of the supporting device (100) having capability to relocate the flowerpots of the present invention has adopted the storing unit (14), as shown in Figs. 1 to 3. A plurality of the supporting panels is abutted each other for covering the water storing unit (14), so that the water is able to supply to the planted pots being placed on the panels of any position and to prevent influx of the foreign objects.

In other word, the supporting unit (110) is consisted of the first, second, third, and fourth supporting panels (111, 112, 113, and 114) for forming a rectangular shape shield by abutting each other for covering the top surface of the plant cultivating unit (14) of the plant cultivating unit (10). So, it is possible to prevent influx of foreign objections; A plurality of the water supplying holes (111a, 112a, 113a, and 114a) is formed to easily supply the water to the planted pots, which is placing on the panel of any position; A plurality of water flow-guide protrusion (111 b, 112b, 113b, and 114b) has formed under the first, second, third, and fourth supporting panels (111, 112, 113, and 114) transversely with constant intervals to separate from the plant cultivating unit (14) for smooth circulating the inflow water; A couple of the circular cutouts (115a, 116a) and end brackets (115, 116) are formed at one end side of the first and fourth panels (111, 114) for installing a connecting unit (12) and a supporting unit (column) (13) by passing through.

Further, a mounting seat (111c, 112c, 113c, and 114c) is formed inner circumference of the water supplying holes (111 a, 112a, 113a, and 114a) of the first, second, third, and fourth supporting panels (111, 112, 113, and 114) for insert-stopping the circular mounting plate (131).

The supporting unit (110) is consisted of the first, second, third, and fourth supporting panels (111, 112, 113, and 114). However, it is possible to reduce the number of panels to combine of second panel and third panel (112, 113), or first panel and second panel (111, 112), or third panel and fourth panel. (113, 114).

The plug (130) as shown in Figs. 1 to 3 is used to block the water supplying holes (111 a, 112a, 113a, and 114a), so that it is possible to avoid the influx of the foreign objects, such as the dust in the room air or the washout soil or fallen leaves.

Namely, the plug (130) for blocking the water supplying holes (111 a, 112a, 113a, and 114a) has formed on the first, second, third, and fourth supporting panels (111, 112, 113, and 114). The mounting seat (111c, 112c, 113c, and 114c) is for mounting-stop a circular mounting plate (131). A mounting rim (133a) has formed circumferentially extending to the lower part of the circular mounting plate (131) for inserting into the water supplying holes (111a, 112a, 113a, and 114a). A serial of inserting sections (133) has formed on the mounting rim (133a) by cutting out arch-shape, circumferentially.

Further, the plug (130) has formed a pin hole (131 b) at the center of the circular mounting plate (131) to easily remove the plug from the water supplying holes (111 a, 112a, 113a, and 114a) by using a pin.

Accordingly, if the plant cultivating unit is primarily installed on the supporting device (100) having capability to relocate the flowerpots of the present invention, the first, second end brackets (115, 116) are separated from the supporting unit (110). Next, the first supporting panel (111) is mounted on the storing unit (14) by inserting into the connecting unit (12) at the one end side. Then, the fourth supporting panel (114) is mounted on the storing unit (14) by inserting into the supporting unit (13) at the opposite end side.

Next, the second and third supporting panels (112, 113) are mounted on the storing unit (14) by abutting to the first and fourth supporting panels (111, 114).

As shown above, the top surface of the storing unit (14) is placed the first, second, third, and fourth supporting panels (111, 112, 113, and 114) by abutting, each other. Then, the first, second end brackets (115, 116) are mounted to the first, and fourth supporting panels (111, 114), respectively.

So, the first, second, third, and fourth supporting panels (111, 112, 113, and 114) of the supporting unit (110) and the first, second end brackets (115, 116) are covered the top surface of the storing unit (14).

When the flowerpot is placed on the supporting unit (110), which is the supporting panels (112), the plug (130) is removed from the water supplying holes (111 a, 112a, 113a, and 114a) by using a pin.

Then, the flowerpot is placed on the supporting panels (112), while the water absorbing unit is inserted into the water supplying holes (111 a, 112a, 113a, and 114a)

As above the flowerpot is placed on the supporting panels (112), then the water is supplied through the water absorbing unit.

When the flowerpot, which is located on a spot of the supporting panel (112) is relocated to other spot, then the plug (130) blocked on the other spot is removed. next, the flowerpot is moved on the other spot of the supporting panel (112), while the water absorbing unit is inserted into the water supplying holes (111 a, 112a, 113a, and 114a)

As above, the supporting device having capability to relocate the flowerpots of the present invention, the top surface of the storing unit is covered, the flowerpot is placed freely to be relocated on any location and avoid the influx of the foreign object.

Although the preferred embodiment of the present invention has been disclosed for illustrative purposes, those skilled in the art will appreciate that various modifications, additions and substitutions are possible, without departing from the scope and spirit of the invention as disclosed in the accompanying claims.

## Claims

1. A supporting device formed a multi-staged plant cultivating unit having capability to relocate the flowerpots on the plant cultivating panel, the supporting device comprising that:
a water storage unit for storing the water;
a water supplying pipe line for supplying the water from the water storage unit by operating a pump;
a plurality of plant cultivating unit (14) forming a container shape for storing inflowing water and overflowing the excess water;
a plant cultivating unit (10) having a shield to cover a top surface of the plant cultivating unit (14);
a supporting unit (110) consisting of a plurality of supporting panels (111, 112, 113, and 114), said supporting panels abutted each other to cover the top surface of the plant cultivating unit (14); and
a plurality of water supplying holes (111a, 112a, 113a, and 114a) being formed on the supporting panels for supplying the water from bottom of the panel to the lower surface of the flowerpots, so that the water is able to supply to the flowerpots placed on the panels of any position.

2. The supporting device formed a multi-staged plant cultivating unit according to claim 1, wherein said supporting unit (110) further comprising first, second, third, and fourth supporting panels (111, 112, 113, and 114) forming rectangular shape to abut each other for covering the top surface of the plant cultivating unit (14) of the plant cultivating unit (10), so that it is possible to prevent influx of foreign objections, a plurality of plug (130) for blocking the water supplying holes (111 a, 112a, 113a, and 114a) for easily relocating the flowerpots in any place, a couple of circular cutouts (115a, 116a) and end brackets (115, 116) formed at one end side of the first and fourth panels (111, 114) for installing into a connecting unit (12) and a supporting column (13) by passing through.

3. The supporting device formed a multi-staged plant cultivating unit according to claim 1 or 2, wherein said plug (130) for blocking the water supplying holes (111a, 112a, 113a, and 114a) forms on the first, second, third, and fourth supporting panels (111, 112, 113, and 114) further comprising:
a mounting seat (111c, 112c, 113c, and 114c) for mounting-stop a circular mounting plate (131), a mounting rim (133a) formed circumferentially extending to lower part of the circular mounting plate (131) for inserting into the water supplying holes (111 a, 112a, 113a, and 114a), a serial of inserting sections (133) formed on the mounting rim (133a) by cutting out arch-shape, circumferentially.

4. The supporting device formed a multi-staged plant cultivating unit according to claim 3, wherein said first, second, third, and fourth supporting panels (111, 112, 113, and 114) further comprising;
a plurality of water flow guide protrution (111b, 112b, 113b, and 114b) formed under the first, second, third, and fourth supporting panels (111, 112, 113, and 114) transversely with constant intervals to separate from the plant cultivating unit (14) for smooth circulating of the inflow water, a plurality of the water supplying holes (111 a, 112a, 113a, and 114a) formed inner-circumference for insert-mounting the plug (130).

5. The supporting device formed a multi-staged plant cultivating unit according to claim 3, wherein said plug (130) further comprising:
A pin hole (131 b) is formed at the center of the circular mounting plate (131) to easily remove the plug from the water supplying holes (111 a, 112a, 113a, and 114a) by using a pin.
